Europäisches Patentamt

European Patent Office

Office européen des brevets

(11) Veröffentlichungsnummer: **0 198 296**
**A1**

## (12) EUROPÄISCHE PATENTANMELDUNG

(21) Anmeldenummer: 86104273.7

(51) Int. Cl.⁴: **A 01 N 25/26**, A 01 N 25/34

(22) Anmeldetag: 27.03.86

(30) Priorität: 27.03.85 DE 3511121

(43) Veröffentlichungstag der Anmeldung: 22.10.86
Patentblatt 86/43

(84) Benannte Vertragsstaaten: AT BE CH DE FR GB IT LI LU NL SE

(71) Anmelder: Donnet, René, Mittelzellerstrasse 8,
D-7752 Insel Reichenau (DE)

(72) Erfinder: Donnet, René, Mittelzellerstrasse 8,
D-7752 Insel Reichenau (DE)

(74) Vertreter: Dr. Elisabeth Jung Dr. Jürgen Schirdewahn
Dipl.-Ing. Claus Gernhardt, P.O.
Box 40 14 68 Clemensstrasse 30,
D-8000 München 40 (DE)

(54) Schwimmfähiger Giftköder für Nagetiere und Verfahren zu seiner Herstellung und im Giftköder enthaltene, mit einer Umhüllung versehene Teilchen.

(57) Aus einem Kern (4a) und einer Umhüllung (4b) bestehende Teilchen enthalten in der Kernmasse einen Giftstoff für Nagetiere zusammen mit zerkleinerten Getreideprodukten und/oder Futterstoffen und Aroma- und/oder Geschmacksstoffen, während die Umhüllungsmasse aus wachs- und/oder gummiartigen Stoffen und/oder Kunststoffen zusammen mit Aroma- und/oder Geschmacksstoffen besteht. Diese umhüllten Teilchen sind in einer Matrix (3) aus einem Grundmaterial geringer Dichte, wie Polystyrol, Kork oder einem festen Schwimmstoff, homogen dispergiert, und diese homogene Mischung wird unter Zusatz eines natürlichen oder synthetischen Wachses (5) zu einem schwimmfähigen Giftköder in Form eines blockartigen Gebildes verformt.

0198296

**ELISABETH JUNG** DR. PHIL., DIPL.-CHEM.
**JÜRGEN SCHIRDEWAHN** DR. RER. NAT., DIPL.-PHYS.
**CLAUS GERNHARDT** DIPL.-ING.

PATENTANWÄLTE
EUROPEAN PATENT ATTORNEYS

8000 MÜNCHEN 40,
P. O. BOX 40 14 68
CLEMENSSTRASSE 30
TELEFON: (089) 34 50 67
TELEGRAMM/CABLE: INVENT MÜNCHEN
TELEX: 5-29 686
TELECOPIERER (FAX): (089) 39 92 39 (GR. II/III)

—1—

27. März 1986

T 073 C   (J/sd)

René Donnet

---

"Schwimmfähiger Giftköder für Nagetiere und Verfahren zu
seiner Herstellung und im Giftköder  enthaltene, mit einer
Umhüllung versehene Teilchen"

Nagetiere, insbesondere Ratten der verschiedenen Spezies,
halten sich mit Vorliebe in der Nähe von Aus- und Beladestationen von Schiffen auf und vernichten wertvolle Wirtschaftsgüter, wodurch ein großer volkswirtschaftlicher Schaden entsteht.

Insbesondere als Folge von Überschwemmungen tritt periodenweise eine Rattenplage auch in landwirtschaftlich wertvollen
Gebieten in Flußniederungen auf, wobei große Mengen an Saatgut
oder bereits eingebrachten Erntefrüchten eine Beute der gefräßigen Tiere werden.

In gleicher Weise können auch andere Nagetiere, wie Mäuse und
sogar Eichhörnchen,unter den verschiedensten Umweltbedingungen
zu einer wirklichen Plage werden und müssen daher bekämpft
werden.

Die bisherigen Giftköder hatten unter solchen Bedingungen aber
nicht die gewünschten Wirkungen, weil sie von den Wassermassen
überflutet wurden und im durchnäßten Zustand für die Nagetiere
nicht mehr attraktiv waren. Außerdem wurden sie durch mechanische Einwirkungen leicht verstreut und konnten daher den Nagetieren nicht mehr in der gewünschten Konzentration und Dichte
angeboten werden.

Aufgabe der Erfindung war es daher, einen wirksameren und
insbesondere schwimmfähigen Giftköder zur Verfügung zu stellen,

POSTSCHECKKONTO: MÜNCHEN 501 75 - 809 · BANKKONTO: DEUTSCHE BANK A.G. MÜNCHEN, LEOPOLDSTR. 71, KONTO-NR. 60/35 794

von welchem die Nagetiere besonders angezogen werden und der seine Wirkung nicht infolge Auslaugung durch Wasser verliert bzw. durch mechanische Einwirkungen, wie Wellenschlag und Wind, nicht über einen größeren Bereich verstreut wird.

Diese Aufgabe wird erfindungsgemäß durch einen als blockförmiges Gebilde vorliegenden, leichtgewichtigen und daher schwimmfähigen Giftköder gelöst, der in einer Matrix aus einem Grundmaterial mit geringer Dichte kleine Teilchen eines den Giftstoff enthaltenden homogenen Gemisches aus zerkleinerten Getreideprodukten und/oder Futterstoffen sowie gegebenenfalls von weiteren vegetabilischen und/oder tierischen Nahrungsstoffen, Geruchs- und/oder Aromastoffen und gegebenenfalls weiteren für Nagetiere geeigneten Zusatzstoffen dispergiert enthält, wobei diese Teilchen eine Umhüllung aus einer homogenen Mischung von den vorstehend genannten Nahrungs-, Genuß-, Geruchs- oder Aromastoffen und weiteren Zusatzstoffen sowie wachs- und/oder gummiartigen Stoffen und/oder Kunststoffen aufweisen. Die Mischung aus dem Grundmaterial geringer Dichte und den mit einer Umhüllung versehenen kleinen Teilchen ist mit einem verflüssigbaren Wachsstoff getränkt und wird dadurch als blockförmiges Gebilde zusammengehalten, in welches auch ein Verankerungshaken eingebettet ist.

Auf diese Weise wird sichergestellt, daß die den aktiven Giftstoff enthaltenden umhüllten Teilchen nicht von dem Wellenschlag des Wassers oder vom Wind fortgetragen werden, sondern ihre Wirkung konzentriert an Ort und Stelle entfalten können. Außerdem läßt sich ein solcher Giftköder in Form eines blockförmigen Gebildes leicht an geeigneten Orten sicher befestigen, und er wird von den Nagetieren besonders gut angenommen.

Als Getreideprodukte eignen sich beispielsweise Weizen, Hafer, Mais, Reis und Gries. Als Futterstoffe geeignet sind unter anderem Sojabohnen und Sojamehl, ferner Brotrinde. Diese Getreideprodukte und Futterstoffe können grob zerkleinert (z.B. Teilchengrößen von 1,5 mm und darunter) oder fein gemahlen bzw. zerquetscht vorliegen.

Als Giftstoffe werden zweckmäßig die bekannten Antikoagulantien eingesetzt, z.B. Bromadialone, Brodifacoum, Chlorophacinon und Difenacoum.

Als Aroma- und/oder Geschmacksstoffe eignen sich die im Handel erhältlichen Öl- oder Pulverpräparate mit z.B. den Duftrichtungen Apfel, Himbeere, Erdbeere, Weinbeere, Birne, Dattel, Käse, Mais, Kartoffel, Kresse sowie sexuelle Reiz- und Anlockstoffe.

Zusätzlich können Appetitanreger mitverwendet werden, wie Cyproheptadine in Extraktform, Extrakte und Essenzen des Chinabaums, Enziantinktur und andere bekannte Produkte dieser Art.

Um die Masse besser zusammenzuhalten, empfiehlt sich die Mitverwendung eines Bindemittels, z.B. in der Form von Stärkepräparaten, Albumin und/oder Zucker, letzterer auch in Sirupform.

Die aus den vorstehenden Bestandteilen herstellbare homogene Masse wird zu kleinen Teilchen verformt, zweckmäßig mit einer Granuliervorrichtung oder Strangpresse oder einer üblichen Pillenpresse. Die Größe der Teilchen liegt im allgemeinen im Bereich von 3 bis 30 mm für den Durchmesser und sie richtet sich zweckmäßig nach der Art der zu bekämpfenden Nagetiere: für Mäuse sind Teilchendurchmesser von 4,5 bis 5 mm empfehlenswert, für Ratten beträgt der Teilchendurchmesser bevorzugt 10 bis 15 mm.

Diese kleinen Teilchen weisen eine Umhüllung oder Hüllschicht auf, die mittels üblicher Vorrichtungen aufgebracht werden kann, z.B. mittels einer Spritzpistole oder durch Aufsprühen in der Wirbelschicht. Die Schichtdicke der Umhüllung beträgt zweckmäßig 0,3 bis 3 mm, je nach der Art der Anwendung. Zum Beispiel ist für die Bekämpfung von Nagetieren in der Landwirtschaft im allgemeinen keine Langzeitanwendung erforderlich, so daß hier mäßige Schichtdicken von etwa 0,3 bis 1 mm ausreichend sind. Müssen jedoch Deichbauten oder Autobahnunterbauten

über längere Zeiträume geschützt werden, so sind größere
Schichtdicken von z.B. 1,5 bis 3,0 mm besser geeignet.

Die Beschichtungsmasse besteht unter anderem aus einem wachs-
und/oder gummiartigen Stoff oder einem Kunststoff und mindestens einem der genannten Aroma- und/oder Geschmacksstoffe,
sowie gegebenenfalls Sexualhormonen und sonstigen Anreiz- oder
Anlockstoffen. Als Wachs eignet sich vor allem wegen der Preiswürdigkeit und leichten Zugänglichkeit ein mikrokristallines
Erdölwachs mit einem Schmelzpunkt im Bereich von etwa 50 bis
60°C. Es können für diesen Zweck aber auch Kautschuklatices
sowie für Anstrichzwekce im Handel erhältliche Acrylüberzugsmassen verwendet werden, die an der Luft und/oder unter der
Einwirkung von Wärme, wie Heißluft, eine trockene Schicht auf
den Teilchen bilden. Im Handel erhältliche Kunststofflatices
enthalten meist schon das erforderliche Härtungs- und Vernetzungsmittel.

Die überzogenen Teilchen werden mit einem Grundmaterial niedriger Dichte, zweckmäßig in einem Volumenverhältnis 1 : 1, vermischt. Hierfür kommen beispielsweise Polystyrol, Kork und die
verschiedensten harten Schäume von Kunststoffen in Betracht.
Diese trockene Mischung wird in einen Behälter bzw. eine Form
eingefüllt und dann erfolgt die Verfestigung und Formgebung
unter Zusatz eines wachsartigen aufgeschmolzenen Stoffes, wie
z.B. des vorstehend beschriebenen mikrokristallinen Wachses.
Das dadurch entstehende blockförmige Gebilde weist einen festen
Zusammenhalt auf und widersteht daher gut jeglicher mechanischer
Beanspruchung. Die Raumform kann beliebig sein, z.B. kugelförmig, kegelförmig (auch als abgestumpfter Kegel), ziegelförmig
oder würfelförmig. Auch ist der Rauminhalt des blockförmigen
Gebildes nicht von ausschlaggebender Bedeutung und richtet sich
eher nach der Größe und der zu erwartenden Population der zu
bekämpfenden Nagetiere. Jedoch lassen sich blockförmige Gebilde
mit einem Rauminhalt von etwa 100 bis 300 cm³ gut handhaben.

Im Block fest eingegossen ist ein Verankerungshaken in Form
eines Drahtes aus einem korrosionsfesten Material, z.B. einer Leichtmetallegierung, wobei der Draht auch erst nach der Herstellung des Köders hakenförmig umgebogen werden kann.

Die Erfindung betrifft auch ein Verfahren zur Herstellung eines Giftköders der vorbeschriebenen Art, welches dadurch gekennzeichnet ist, daß man Getreideprodukte und/oder Futterstoffe zerkleinert, dann nacheinander oder gleichzeitig einen flüssigen und/oder pulverförmigen Giftstoff sowie mindestens einen Aroma- und/oder Geschmacksstoff, gegebenenfalls den Appetit anregende Wirkstoffe, gegebenenfalls Farbstoffe, gegebenenfalls Hormone, sowie gegebenenfalls zerkleinerte vegetabilische und/oder tierische Nahrungsstoffe, ferner ein natürliches und/oder ein künstlich hergestelltes Bindemittel zusetzt und diese Bestandteile homogen vermischt und daraus Granulate, Pillen oder andere kleine Formteilchen herstellt, daß man diese Teilchen mit einer Mischung umhüllt, welche aus wachsartigen und/oder gummiartigen Stoffen und/oder Kunststoff sowie darin gelösten oder dispergierten Aroma- und/oder Geschmacksstoffen, gegebenenfalls den Appetit anregenden Wirkstoffen, gegebenenfalls Farbstoffen und/oder Hormonen, gegebenenfalls vegetabilischen und/oder tierischen Nahrungsstoffen besteht, und schließlich die so gebildeten umhüllten Teilchen in einem Grundmaterial geringer Dichte möglichst gleichmäßig verteilt und in einer Form unter Zusatz von verflüssigtem natürlichen oder künstlichen Wachs zu einem blockartigen Gebilde verformt, wobei vor dem Verformen in die Form auch noch ein Verankerungshaken oder -draht eingelegt wird, welcher zu einem integralen Bestandteil des blockförmigen Gebildes wird.

Die Erfindung bezieht sich auch auf die gemäß vorstehend erläutertem Verfahren herstellbaren umhüllten Teilchen. Die Maßnahme der Verteilung dieser umhüllten Teilchen in einem Grundmaterial geringer Dichte und der Verformung zu einem blockartigen Gebilde kann vom Endverbraucher oder einem Gewerbebetrieb vorgenommen werden, da entsprechendes Grundmaterial geringer Dichte im Handel erhältlich ist und die Verformung unter Zusatz von einer flüssigen oder verflüssigbaren Wachskomponente keine besonderen verfahrenstechnischen Schwierigkeiten bietet.

Die Erfindung wird nachstehend anhand der Zeichnung näher erläutert.

Fig.1 zeigt in voller Ansicht einen kegelstumpfförmigen Köder
(1) mit Verankerungshaken (2),

Fig.2 stellt einen Längsschnitt durch den Giftköder gemäß

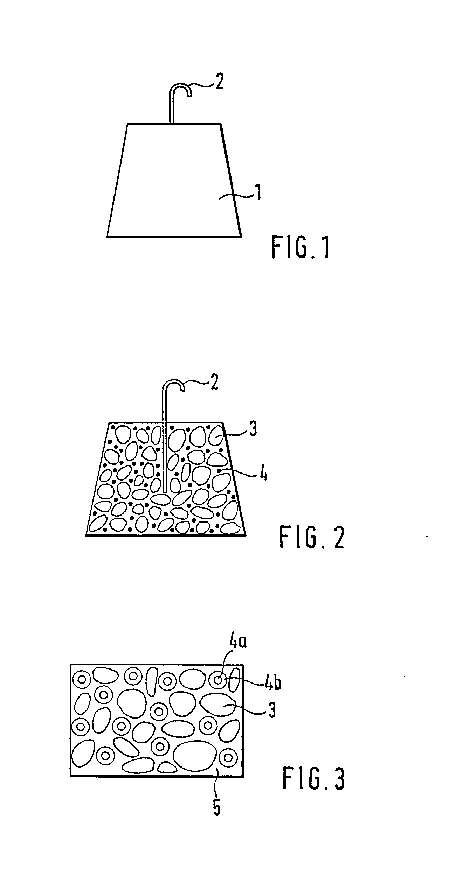

Fig.1 dar,

Fig.3 zeigt einen Ausschnitt aus dem blockförmigen Körper des
Giftköders.

Aus Fig.2 ist ersichtlich, daß die umhüllten Teilchen 4 gleichmäßig von den Matrixteilchen 3 des Grundmaterials mit niedriger Dichte umgeben sind und in der Matrix dispergiert vorliegen.

Fig.3 läßt die Struktur der umhüllten Teilchen 4 erkennen, welche aus einem Kern 4a und der Umhüllung 4b bestehen. Der
Zwischenraum zwischen den Matrixteilchen 3 und den umhüllten
Teilchen (4a, 4b) ist von einer Wachsmasse 5 ausgefüllt.

Ausführungsbeispiel
_____

Zur Herstellung eines Giftköders, der insbesondere zur
Bekämpfung von Mäusen jeglicher Spezies geeignet ist, zum
Beispiel von Wühlmäusen, werden die folgenden Bestandteile
in einer Homogenisierungsvorrichtung homogen miteinander
vermischt:

| zerkleinerter Weizen (passiert ein Sieb mit einer Maschenweite von 1,5 mm) | 25 kg |
|---|---|
| zerkleinerter Mais des gleichen Feinheitsgrades | 25 kg |
| zerkleinerter Hafer des gleichen Feinheitsgrades | 25 kg |
| Farbstoff | 3 kg |
| aromatisiertes Pulver (Käsegeruch) | 3 kg |
| Brodifacoum | 2 kg |

Aus dieser homogenen Mischung (83 kg) werden in einer Presse kleine Zylinder mit einem Durchmesser von etwa 5 mm geformt. Die Zylinder werden in eine Vorrichtung gefüllt, in der die kleinen Formteilchen ständig bewegt werden, und dann bringt man mittels einer üblichen Spritzpistole, wie sie auch in der Anstrichtechnik verwendet wird, die nachstehende Mischung als Umhüllung in einer Dicke von etwa 1 mm auf:

| Acrylüberzugsmasse, wie sie auch für Anstrichzwecke verwendet wird | 15 kg |
|---|---|
| aromatisiertes Pulver (Käsegeruch) | 2 kg |

Das Trocknen der Umhüllung auf den Formteilchen kann durch Darüberblasen von Warmluft beschleunigt werden.

Die überzogenen Zylinderteilchen (Gesamtmasse: 100 kg) werden mit der gleichen Volumenmenge eines zerkleinerten festen Polystyrolschaums vermischt und je 200 cm³ des trockenen Gemisches werden in Kunststoffbehälter von 200 cm³ Fassungvermögen eingefüllt. Im Zentrum der lockeren Füllung wird ein Draht aus einem korrosionsfesten Material, wie einer Leichtmetallegierung, angeordnet, und dann wird der Behälter mit verflüssigtem mikrokristallinem Erdölwachs (Schmelzbereich: 53 bis 58°C, je nach Reinheitsgrad) aufgefüllt, wobei das Wachs die Hohlräume zwischen den überzogenen zylindrischen Teilchen und den Polystyrolschaumteilchen ausfüllt und den Metalldraht fixiert. Dieser wird dann vor dem Gebrauch der Giftköder zu einem Verankerungshaken umgebogen.

0198296

Anstelle des Behälters kann man auch eine beliebige andere formgebende Vorrichtung verwenden, um den Ausstoß an Giftködern in Form blockförmiger Gebilde zu automatisieren und dadurch zu erhöhen.

Patentansprüche

1. Schwimmfähiger Giftköder für Nagetiere, d a d u r c h
g e k e n n z e i c h n e t , daß er in einer Matrix aus
einem Grundmaterial mit geringer Dichte kleine Teilchen
eines homogenen Gemisches aus

a) einem flüssigen und/oder pulverförmigen Giftstoff,
b) Aroma- und/oder Geschmacksstoffen in Form eines Öls oder
   Pulvers, gegebenenfalls Farbstoffen, gegebenenfalls Hormonen, gegebenenfalls den Appetit anregenden Wirkstoffen,
   gegebenenfalls zerkleinerten vegetabilischen und/oder
   tierischen Stoffen,
c) natürlichen und/oder künstlich hergestellten Bindemitteln
   und
d) zerkleinerten Getreideprodukten und/oder Futterstoffen

dispergiert enthält, wobei jedes dieser Teilchen von einer
homogenen Mischung aus einem oder mehreren Stoffen der
Gruppe (b) sowie wachs- und/oder gummiartigen Stoffen und/oder
einem Kunststoff umhüllt ist, und daß die Matrix mit den darin dispergierten umhüllten Teilchen unter Zusatz eines natürlichen und/oder synthetischen Wachses zu einem blockförmigen Gebilde mit darin eingebettetem Verankerungshaken verformt ist.

2. Schwimmfähiger Giftköder nach Anspruch 1, dadurch gekennzeichnet, daß der Giftstoff ein antikoagulierend wirkendes Rodentizid ist.

3. Schwimmfähiger Giftköder nach Anspruch 1 und 2, dadurch
gekennzeichnet, daß die Umhüllungssubstanz ein in der Wärme
verflüssigbares Wachs oder Paraffin enthält.

4. Schwimmfähiger Giftköder nach Anspruch 1 und 2, dadurch
gekennzeichnet, daß die Umhüllungssubstanz einen mit Aromastoffen angereicherten synthetischen oder natürlichen Gummistoff und/oder einen Kunststoff enthält.

0198296

5.   Schwimmfähiger Giftköder nach Anspruch 1 und 2, dadurch gekennzeichnet, daß die Umhüllungssubstanz einen gummiartigen Stoff und/oder einen Kunststoff in Form eines Latex
enthält.


6.   Schwimmfähiger Giftköder nach Anspruch 1 bis 5, dadurch
gekennzeichnet, daß das Grundmaterial geringer Dichte Polystyrol, Kork oder ein fester Schaumstoff ist.


7.   Schwimmfähiger Giftköder nach Anspruch 1 bis 6, dadurch
gekennzeichnet, daß das Volumenverhältnis von dispergierten
Teilchen zum Grundmaterial geringer Dichte etwa 1 : 1 beträgt.


8.   Schwimmfähiger Giftköder nach Anspruch 1 bis 7, dadurch
gekennzeichnet, daß die in der Matrix aus einem Grundmaterial
dispergierten Teilchen einen Durchmesser von 3 bis 30 mm aufweisen, bei Verwendung für Rattenköder vorzugsweise im Bereich
von 10 bis 15 mm und bei Verwendung für Mäuseköder vorzugsweise im Bereich von 4,5 bis 5 mm.


9.   Schwimmfähiger Giftköder nach Anspruch 1 bis 8, dadurch
gekennzeichnet, daß die in der Matrix aus einem Grundmaterial
dispergierten Teilchen eine Umhüllungsschicht mit einer Dicke
von 0,3 bis 3 mm aufweisen.


10.  Verfahren zur Herstellung eines Giftköders nach Anspruch
1 bis 9, dadurch gekennzeichnet, daß man Getreideprodukte
und/oder Futterstoffe zerkleinert, dann nacheinander oder
gleichzeitig einen flüssigen und/oder pulverförmigen Giftstoff
sowie mindestens einen Aroma- und/oder Geschmacksstoff, gegebenenfalls den Appetit anregende Wirkstoffe, gegebenenfalls
Farbstoffe, gegebenenfalls Hormone sowie gegebenenfalls zerkleinerte vegetabilische und/oder tierische Nahrungsstoffe,
ferner ein natürliches und/oder ein künstlich hergestelltes
Bindemittel zusetzt und diese Bestandteile homogen vermischt
und daraus Granulate, Pillen oder andere kleine Formteilchen
herstellt, daß man diese Teilchen mit einer Mischung umhüllt, welche aus wachsartigen und/oder gummiartigen Stoffen und/oder
Kunststoff sowie darin gelösten oder dispergierten Aroma- und/
oder Geschmacksstoffen, gegebenenfalls den Appetit anregenden
Wirkstoffen, gegebenenfalls Farbstoffen und/oder Hormonen,
gegebenenfalls vegetabilischen und/oder tierischen Nahrungsstoffen besteht, und schließlich die so gebildeten umhüllten
Teilchen in einem Grundmaterial geringer Dichte möglichst
gleichmäßig verteilt und in einer Form unter Zusatz von verflüssigtem natürlichen und/oder künstlichen Wachs zu einem
blockförmigen Gebilde verformt, wobei vor dem Verformen in die
Form auch noch ein Verankerungshaken oder -draht eingelegt
wird, der zu einem integralen Bestandteil des blockartigen
Gebildes wird.

11. Verfahren nach Anspruch 10, dadurch gekennzeichnet, daß
die Form nach dem Einfüllen der Mischung aus Grundmaterial
niedriger Dichte und den umhüllten Teilchen mit verflüssigtem
Paraffin gefüllt wird.

12. Umhüllte Teilchen, insbesondere zur Herstellung eines
Giftköders nach Anspruch 1 bis 9, gekennzeichnet durch einen
Kern, bestehend aus einem homogenen Gemisch aus

a) einem flüssigen und/oder pulverförmigen Giftstoff,
b) Aroma- und/oder Geschmacksstoffen in Form eines Öls oder
   Pulvers, gegebenenfalls Farbstoffen, gegebenenfalls Hormonen, gegebenenfalls den Appetit anregenden Wirkstoffen,
   gegebenenfalls zerkleinerten vegetabilischen und/oder
   tierischen Stoffen,
c) natürlichen und/oder künstlich hergestellten Bindemitteln
   und
c) zerkleinerten Getreideprodukten und/oder Futterstoffen

und eine Umhüllung, bestehend aus einer homogenen Mischung
aus einem oder mehreren Stoffen der Gruppe (b) sowie wachs-
und/oder gummiartigen Stoffen und/oder einem Kunststoff.

13. Umhüllte Teilchen nach Anspruch 12, dadurch gekennzeichnet, daß der Giftstoff ein antikoagulierend wirkendes

0198296

Rodenticid ist.

14. Umhüllte Teilchen nach Anspruch 12 und 13, dadurch gekennzeichnet, daß die Umhüllungssubstanz ein in der Wärme verflüssigbares Wachs oder Paraffin enthält.

15. Umhüllte Teilchen nach Anspruch 12 und 13, dadurch gekennzeichnet, daß die Umhüllungssubstanz einen mit Aromastoffen angereicherten synthetischen oder natürlichen Gummistoff und/oder einen Kunststoff enthält.

16. Umhüllte Teilchen nach Anspruch 12 und 13, dadurch gekennzeichnet, daß die Umhüllungssubstanz einen gummiartigen Stoff und/oder einen Kunststoff in Form eines Latex enthält.

17. Umhüllte Teilchen nach Anspruch 12 bis 16, dadurch gekennzeichnet, daß sie einen Durchmesser von 3 bis 30 mm aufweisen, bei Verwendung für Rattenköder vorzugsweise im Bereich von 10 bis 15 mm und bei Verwendung für Mäuseköder vorzugsweise im Bereich von 4,5 bis 5 mm.

18. Umhüllte Teilchen nach Anspruch 12 bis 17, dadurch gekennzeichnet, daß sie eine Umhüllungsschicht mit einer Dicke von 0,3 bis 3 mm aufweisen.

FIG.1

FIG.2

FIG.3

# 0198296
Nummer der Anmeldung

**EUROPÄISCHER RECHERCHENBERICHT**

Europäisches
Patentamt

EP 86 10 4273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 233 115 (SOCIETE FRANCAISE DE COMPLEMENTS ALIMENTAIRES) * Seite 6; Zusammenfassung * | 1-18 | A 01 N 25/26 A 01 N 25/34 |
| Y | | 1-11 | |
| X | DE-A-2 158 880 (RIKKIHAPPO) * Patentansprüche * | 12-18 | |
| Y | | 1-11 | |
| Y | FR-A-2 288 464 (L. CABROL) * Patentanspruch 1 * | 1-11 | |
| A | FR-A-1 267 950 (R. MOQUET et al.) | | RECHERCHIERTE SACHGEBIETE (Int. Cl.4) A 01 N |
| A | FR-A-2 032 164 (INSTITUT PASTEUR) | | |
| A | FR-A-2 205 270 (R. LAURENT) | | |
| A | FR-A-2 036 586 (EUROPE-SERVICES) -/- | | |

Der vorliegende Recherchenbericht wurde für alle Patentansprüche erstellt.

| Recherchenort | Abschlußdatum der Recherche | Prüfer |
|---|---|---|
| DEN HAAG | 07-08-1986 | DECORTE D. |

Europäisches
Patentamt

**EUROPÄISCHER RECHERCHENBERICHT**

0198296
Nummer der Anmeldung

EP 86 10 4273

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 345 922 (G. MATTENS) | | |
| | --- | | |
| A | DE-B-1 146 695 (J.R. GEIGY) | | |
| | ----- | | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 07-08-1986 | DECORTE D. |